# EUROPEAN PATENT SPECIFICATION

(11) **EP 0 447 084 B1**
(45) Date of publication and mention of the grant of the patent: **18.05.1994**
(21) Application number: 91301764.6
(22) Date of filing: 04.03.1991
(51) Int. Cl.: B24B 13/06

(54) **Ophthalmic lens manufacture**
Herstellung von optischen Linsen
Fabrication de lentilles ophtalmiques

(30) Priority: 14.03.1990 GB 9005739
(43) Date of publication of application: 18.09.1991
(73) Proprietor: NORVILLE OPTICAL COMPANY LIMITED, Gloucester GL1 4DG (GB)
(72) Inventor: Norville, Frank Goodwin, Gloucester GL1 4DG (GB)
(74) Representative: Harding, Richard Patrick

## Description

The invention relates to the manufacture of ophthalmic lenses, and is particularly concerned with the final surfacing (smoothing and polishing) of the lenses on a lens surfacing machine. With such a machine the lens surfacing is achieved in a "lapping" operation with relative orbital motion of the lens, ground to the required dioptre surface, and a matching die or "lap" on which an abrasive/polishing pad conforming to the lap surface is adhered. The invention is particularly applicable to the surfacing of spectacle lenses starting from the individual prescription supplied by an optician or optometrist.

The lapping speed and time and pressure of the machine are variable, and for surfacing a given lens these variables are more or less critical, and any material departure from the optimum values results in an expensive already-ground lens blank being scrapped. At present the machine speed and time is determined by an operative on the basis of skill and experience, and a careless or unskilled operative canproduce much expensive scrap. There is in any case a tendency to operate the machine at mean values and not to change these for different lenses unless it is absolutely necessary, with the result that even when of acceptable quality the resultant lenses are not as good as they might have been. The invention overcomes this problem and ensures that near-optimum machine times and speeds are used at all times.

AT-E-37678 discloses a process and apparatus for the computer control of edge grinding of an optical lens blank. With this apparatus data corresponding to the positions of the pupils of the intended wearer of the finished spectacles in relation to the position of the spectacle frame is input into the computer by displaying an image of the spectacle rim on a screen, and moving that image on the screen according to the known positions of the pupils of the wearer. The present invention extends computer control to the final surfacing of the optical surface of a lens.

According to the invention, the lens prescription details are fed into a computer which is programmed to determine the appropriate speed and time for lens surfacing after grinding, and to produce a corresponding document which combines visual information for an operative as to the lapping die or lap to be selected and a job identifier which provides computer identification of the particular job to which the prescription and document relate, with identification thereof by computer resulting in computer control of the lens surfacing machine in respect of lapping speed and time. Said document may employ any form of information storage/display, but it is preferably a hard copy document in the form of a job sheet produced on a printer controlled by the producing computer and it will for convenience be described as such hereinafter, but without any intention of so limiting the invention or its application.

The job identifier is preferably in the form of a printed bar code which, for job identification, is read by a reading head connected to the identifying computer. A single computer is preferably employed, both to prepare the job sheet from the prescription and to control the speed and time of the the lens surfacing machine. However, if desired separate computers may be employed - one to produce the job sheet and the other to identify the job therefrom and to control the machine. In this case the job sheet will include details of the speed and time information for the machine adapted to be read by said other computer, and information may be included in the form of a second bar code to be read by that computer.

Prior to the surfacing operation pre-ground lens blanks are selected and finally ground to the desired dioptre surfaces. At present the lens blanks are selected from stock according to a chart prepared by lens designers, with the stock including blanks of various types of lens material, and the computer of the invention may be programmed to identify the appropriate blanks for grinding as well as to determine the speed and time of the surfacing machine. If desired the computer may also be programmed to control the lens grinding machine as well as the lens surfacing machine.

Normally lens surfacing consists of two or more lapping operations, with a coarse pad followed by at least one finer pad, either on the same or on different machines. The computer may be programmed to control all the lapping operations for different speeds and times, when this is appropriate.

The invention includes within its scope not only a process of manufacture of an ophthalmic lens employing a lens surfacing machine as aforesaid but also a control system for a lens surfacing machine according to claim 11.

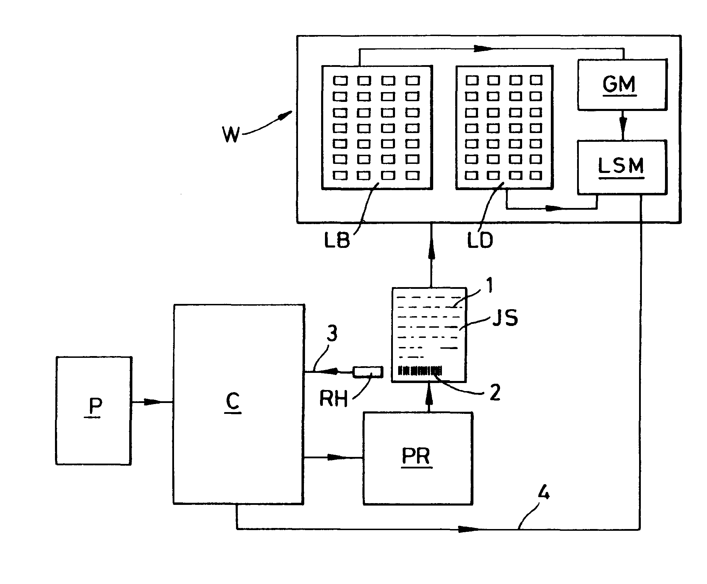

The invention will now be further described with reference to the accompanying drawing in the form of a flow diagram illustrating, by way of example, a lens surfacing procedure in accordance with the invention. The procedure commences with the lens prescription P provided by an optician or optometrist and which specifies the required powers of two spectacle lenses. The lens particulars are fed into a computer C controlling a printer PR which prints a job sheet JS. This job sheet is passed to the workshop W and includes visual instructions 1 for an operative and a job identifying bar code 2.

The instructions 1 identify the lens blanks to be selected from stock at LB and contain setting up details for the lens grinding machine GM on which the lenses are ground to the prescription. The instructions 1 also identify the lapping dies to be selected from stock at LD, the ground lenses and the dies selected according to the printed instructions being placed on the lens surfacing machine LSM by the operative. The bar code 2 is now scanned by a reader head RH connected via lead 3 to the computer C, which thus identifies the particular job and from its memory selects the previously computed operating speed and time for the machine LSM appropriate to that job, the machine LSM being controlled correspondingly by the computer C via a control link 4.

Normally the so-surfaced lenses will be passed to a second lens surfacing machine (not shown) similar to the machine LSM but with the dies fitted with a finer lapping pad. This second machine is similarly controlled by the computer C after identifying the job by reading the bar code 2.

## Claims

1. Process of manufacture of an ophthalmic lens employing a lens surfacing machine (LSM), characterised in that the prescription (P) details of the lens are fed into a computer (C) which is programmed to determine the appropriate speed and time for lens surfacing after grinding, and to produce a corresponding document (JS) which combines visual information (1) for an operative as to the lapping die or lap to be selected and a job identifier (2) which provides computer identification of the particular job to which the prescription (P) and document (JS) relate, with identification thereof by computer resulting in computer control of the lens surfacing machine (LSM) in respect of lapping speed and time.

2. Process of manufacture of an ophthalmic lens according to Claim 1, wherein said document is a hard copy document in the form of a job sheet (JS) produced on a printer (PR) controlled by the producing computer (C).

3. Process of manufacture of an ophthalmic lens according to Claim 1 or Claim 2, wherein the job identifier is in the form of a printed bar code (2) which, for job identification, is read by a reading head (RH) connected to the identifying computer (C).

4. Process of manufacture of an ophthalmic lens according to any one of the preceding claims, wherein a single computer (C) is employed, both to prepare the job sheet (JS) from the prescription (P) and to control the speed and time of the lens surfacing machine (LSM).

5. Process of manufacture of an ophthalmic lens according to any one of Claims 1 to 3, wherein two separate computers are employed - one to produce the job sheet (JS) and the other to identify the job therefrom and to control the lens surfacing machine (LSM).

6. Process of manufacture of an ophthalmic lens according to Claim 5, wherein the job sheet (JS) includes details of the speed and time information for the lens surfacing machine (LSM) adapted to be read by said other computer.

7. Process of manufacture of an ophthalmic lens according to Claim 3 and Claim 6, wherein said speed and time information is included in the form of a second bar code to be read by said other computer.

8. Process of manufacture of an ophthalmic lens according to any one of the preceding claims, wherein the computer (C) which identifies the job and determines the speed and time of the lens surfacing machine (LSM) also identifies the appropriate blank for grinding to the desired dioptre surface prior to the computer-controlled surfacing operation.

9. Process of manufacture of an ophthalmic lens according to Claim 8, wherein the computer (C) which controls the lens surfacing machine (LSM) also controls the lens grinding machine (GM).

10. Process of manufacture of an ophthalmic lens according to any one of the preceding claims, wherein the lens surfacing procedure consists of two or more lapping operations, with a coarse pad followed by at least one finer pad, either on the same or on different machines, and the computer (C) is programmed to control all the lapping operations for different speeds and times, as appropriate.

11. A control system for a machine (LSM) used in the manufacture of an ophthalmic lens comprising a computer (C) adapted to be fed with data (P) relating to the lens and computer-controlled control means for the machine (LSM), characterised in that the machine (LSM) is a lens surfacing machine, in that the computer (C) is adapted to be fed with prescription details (P) of the lens, by means (PR) to produce a document (JS), in that the computer (C) is programmed to determine the appropriate speed and time for lens surfacing after grinding and to control said document-producing means (PR) to produce a document (JS) which combines visual information (1) for an operative as to the lapping die or lap to be selected and a job identifier (2) which provides computer identification of the particular job to which the prescription (P) and document (JS) relate, and by computer associated identifying means (RH) for reading the document (JS) with resultant computer control of the machine (LSM) in respect of lapping speed and time.

## Patentansprüche

1. Verfahren zur Herstellung einer optischen Linse mittels einer Linsenoberflächenbearbeitungsmaschine (LSM), dadurch gekennzeichnet, dass die Verordnungseinzelheiten (P) der Linse einem Rechner (C) zugeführt werden, welcher programmiert ist, um die geeignete Geschwindigkeit und Zeit für die Linsenoberflächenbearbeitung nach dem Schleifen zu bestimmen und, um ein entsprechendes Dokument (JS) zu erzeugen, welches die visuellen Informationen (1) für einen Bedienungsmann hinsichtlich des auszuwählenden Läppkopfes oder Werkzeuges und eine Arbeitsbezeichnung (2) beinhaltet, welches eine Rechneridentifizierung der jeweiligen Arbeit enthält, zu der die Verordnung (P) und das Dokument (JS) gehören, wobei diese Identifizierung durch den Rechner zu einer Rechnersteuerung der Linsenoberflächenbearbeitungsmaschine (LSM) hinsichtlich der Läppgeschwindigkeit und Zeit führt.

2. Verfahren zur Herstellung einer optischen Linse nach Anspruch 1, bei welchem das Dokument ein Dokument auf Papierträger in Form eines Arbeitsblattes (JS) ist, welches auf einem von dem herstellenden Rechner (C) gesteuerten Drucker (PR) erzeugt wird.

3. Verfahren zur Herstellung einer optischen Linse nach Anspruch 1 oder 2, bei welchem die Arbeitsbezeichnung in Form einer gedruckten Strichmarkierung (2) ist, welche zur Arbeitsidentifizierung mittels eines Lesekopfes (RH), welcher an den Identifizierungsrechner (C) angeschlossen ist, gelesen wird.

4. Verfahren zur Herstellung einer optischen Linse nach einem der vorangehenden Ansprüche, bei welchem ein einziger Rechner (C) angewendet wird, um sowohl das Arbeitsblatt (JS) alut der Verordnung (P) vorzubereiten, als auch die Geschwindigkeit und Zeit der Oberflächenbearbeitungsmaschine (LSM) zu steuern.

5. Verfähren zur Herstellung einer optischen Linse nach einem der Ansprüche 1 bis 3, bei welchem zwei getrennte Rechner benutzt werden - einer zur Herstellung des Arbeitsblattes (JS) und der andere zur Idendifizierung der Arbeit auf Grund dieses Arbeitsblattes und zur Steuerung der Linsenoberflächenbehandlungsmaschine (LSM).

6. Verfahren zur Herstellung einer optischen Linse nach Anspruch 5, bei welchem das Arbeitsblatt (JS) Einzelheiten über die Geschwindigkeit und Zeitinformation für die Linsenoberflächenbearbeitungsmaschine (LSM) enthält, welche so aufbereitet ist, dass sie mit Hilfe des anderen Rechners gelesen werden kann.

7. Verfahren zur Herstellung einer optischen Linse nach Anspruch 3 und 6, bei welchem die Geschwindigkeit- und Zeitinformation in Form einer zweiten Strichmarkierung, welche von dem anderen Rechner gelesen werden soll, vorgesehen ist.

8. Verfahren zur Herstellung einer optischen Linse nach einem der vorangehenden Ansprüche, bei welchem der Rechner (C), welcher die Arbeit identifiziert und die Geschwindigkeit und Zeit der Linsenoberflächenbearbeitungsmaschine (LSM) bestimmt, auch den geeigneten Rohling für das Schleifen auf die gewünschte Dioptriefläche vor dem rechnergesteuerten Oberflächenbearbeitungsvorgang bestimmt.

9. Verfahren zur Herstellung einer optischen Linse nach Anspruch 8, bei welchem der Rechner (C), welcher die Linsenoberflächenbearbeitungsmaschine (LSM) steuert, auch die Linsenschleifmaschine (GM) steuert.

10. Verfahren zur Herstellung einer optischen Linse nach einem der vorangehenden Ansprüche, bei welchem der Bearbeitungsvorgang der Linsenoberfläche aus zwei oder mehr Läppvorgängen besteht, mit einem Grobläppwerkzeug gefolgt von mindestens einem feineren Läppwerkzeug, entweder auf der gleichen oder auf verschiedenen Maschinen, und der Rechner (C) programmiert ist, um alle Läppvorgänge bei verschiedenen Geschwindigkeiten und Zeiten zu steuern, so wie dies geeignet ist.

11. Steuerungssystem für eine Maschine (LSM), welche zur Herstellung einer optischen Linse benutzt wird, mit einem Rechner (C), dem die die Linse betreffenden Daten (P) zugeführt werden können, und einer rechnergesteuerten Steuervorrichtung für die Maschine (LSM), dadurch gekennzeichnet, dass die Maschine (LSM) eine Linsenoberflächenbearbeitungsmaschine ist, dass dem Rechner (C) die Verordnungseinzelheiten (P) der Linse zugeführt werden können, dass Mittel (PR) zur Erzeugung eines Dokumentes (JS) vorgesehen sind, dass der Rechner (C) programmiert ist, um die geeignete Geschwindigkeit und Zeit für die Linsenoberflächenbearbeitung nach dem Schleifen zu bestimmen und die Mittel (PR) zur Dokumentenherstellung zu steuern, um ein Dokument (JS) zu produzieren, welches für einen Bedienungsmann visuelle Informationen (1) betreffend den auszuwählenden Läppkopf oder Werkzeug und eine Arbeitsbezeichnung (2), und eine Rechnerbezeichnung der jeweiligen Arbeit, zu welcher die Verordnung (P) und das Dokument (JS) gehören, kombiniert und, dass dem Rechner zugeorndete Identifizierungsmittel (RH) vorgesehen sind, um das Dokument (JS) zu lesen, wodurch eine rechnergesteuerte Steuerung der Maschine (LSM) bezüglich der Läppgeschwindigkeit und Zeit erfolgt.

## Revendications

1. Procédé de fabrication d'une lentille ophthalmique utilisant une machine (LSM) de traitement de la surface d'une lentille, caractérisé en ce que les détails de prescription (P) de la lentille sont alimentés dans un ordinateur (C) qui est programmé pour déterminer la vitesse et le temps appropriés pour le traitement de la surface de la lentille après le meulage, et pour produire un document correspondant (JS) qui combine des informations visuelles (1) pour un machiniste concernant la tête ou outil de rodage à choisir et un identificateur de travail (2) qui fournit une identification par ordinateur du travail particulier concerné par la prescription (P) et le document (JS), dont l'identification par ordinateur résulte dans la commande par ordinateur de la machine (LSM) de traitement de la surface de la lentille en ce qui concerne la vitesse et le temps de rodage.

2. Procédé de fabrication d'une lentille opthalmique selon la revendication 1, dans lequel ledit document est un document à support en papier sous forme d'une feuille de travail (JS) produite par une imprimante (PR) commandée par l'ordinateur producteur (C).

3. Procédé de fabrication d'une lentille ophthalmique selon la revendication 1 ou 2, dans lequel l'identificateur de travail est sous forme d'un code à barres (2) imprimé, qui, pour l'identification du travail, est lu à l'aide d'une tête de lecture (RH) connectée à l'ordinateur identificateur (C).

4. Procécé de fabrication d'une lentille ophthalmique selon une des revendications précédentes, dans lequel un ordinateur unique (C) est utilisé aussi bien pour préparer la feuille de travail (JS) à partir de la prescription (P) que pour commander la vitesse et le temps de la machine (LSM) de traitement de la surface de la lentille.

5. Procédé de fabrication d'une lentille ophthalmique selon une des revendications 1 à 3, dans lequel deux ordinateurs séparés sont utilisés - un pour produire la feuille de travail (JS) et l'autre pour identifier le travail à partir de ladite feuille et pour commander la machine (LSM) de traitement de la surface de la lentille.

6. Procédé de fabrication d'une lentille ophthalmique selon la revendication 5, dans lequel la feuille de travail (JS) comprend des détails de l'information vitesse et temps pour la machine (LSM) de traitement de la surface de la lentille adaptée pour être lue par l'autre ordinateur.

7. Procédé de fabrication d'une lentille ophthalmique selon la revendication 3 et 6, dans lequel l'information vitesse et temps est incluse sous forme d'un second code à barres à lire par ledit autre ordinateur.

8. Procédé de fabrication d'une lentille ophthalmique selon une quelconque des revendications précédentes, dans lequel l'ordinateur (C), qui identifie le travail et détermine la vitesse et le temps de la machine (LSM) de traitement de surface de la lentille, identifie également l'ébauche appropriée pour meuler la surface dioptrique désirée avant l'opération de traitement de la surface commandée par ordinateur.

9. Procédé de fabrication d'une lentille ophthalmique selon la revendication 8, dans lequel l'ordinateur (C), qui commande la machine (LSM) de traitement de surface de la lentille, commande également la machine (GM) de meulage de lentille.

10. Procédé de fabrication d'une lentille ophthalmique selon une quelconque des revendications précédentes, dans lequel la procédure de traitement de la surface de la lentille consiste en deux ou plusieurs opérations de rodage, à l'aide d'un coussin grossier suivi par au moins un coussin fin, ou bien sur la même machine ou une machine différente, et que l'ordinateur (C) est programmé pour commander toutes les opérations de rodage à des vitesses et temps différents, tels qu'ils sont appropriés.

11. Système de commande pour une machine (LSM) utilisée dans la fabrication d'une lentille ophthalmique comprenant un ordinateur (C) adapté pour être alimenté avec des données (P) concernant la lentille et un moyen de commande commandé par ordinateur pour la machine (LSM), caractérisé en ce que la machine (LSM) est une machine de traitement de la surface d'une lentille, que l'ordinateur (C) est adapté pour recevoir des détails de prescription (P) de la lentille, que des moyens (PR) sont prévus pour produire un document (JS), que l'ordinateur (C) est programmé pour déterminer la vitesse et le temps appropriés pour le traitement de la surface de la lentille après le meulage et pour commander le moyen (PR) de production d'un document pour produire un document (JS) qui combine pour un machiniste l'information visuelle relative à la tête ou l'outil de rodage à choisir et un identificateur de travail (2) qui fournit une identification par ordinateur du travail particulier concerné par la prescription (P) et le document (JS), et qu'un moyen d'identification (RH) est associé à l'ordinateur pour lire le document (JS) avec une commande résultante par ordinateur de la machine (LSM) en ce qui concerne la vitesse et le temps de rodage.
